# EUROPÄISCHE PATENTSCHRIFT

(11) **EP 1 619 007 B1**
(45) Veröffentlichungstag und Bekanntmachung des Hinweises auf die Patenterteilung: **27.02.2008**
(21) Anmeldenummer: 04405471.6
(22) Anmeldetag: 22.07.2004
(51) Int. Cl.: B29C 53/04, B60R 13/02

(54) **Verfahren zur Herstellung eines gekrümmten Versteifungskörpers**
Process for producing a curved rigidity member
Procédé pour fabriquer un élément de rigidité courbé

(43) Veröffentlichungstag der Anmeldung: 25.01.2006
(73) Patentinhaber: Alcan Technology & Management Ltd., 8212 Neuhausen am Rheinfall (CH)
(72) Erfinder: Walsch, Thomas, 49525 Lengerich i.W. (DE); Klenke, Detlev, 49134 Wallenhorst (DE); Feldmann, Andreas, 49565 Bramsche (DE); Behre, Kurt, 49078 Osnabrück (DE); Seidel, Siegfried, 49205 Hasbergen (DE); Hermes, Christian, 49124 Georgsmarienhütte (DE)

(56) Entgegenhaltungen:
- EP-A- 0 424 312
- EP-A- 1 302 370
- DE-A- 19 949 643
- DE-C- 496 291
- DE-C- 914 002
- DE-C- 19 632 055
- FR-A- 2 770 448

## Beschreibung

Die Erfindung betrifft ein Verfahren nach dem Oberbegriff des Anspruchs 1.

Zur Erhöhung der Belastbarkeit der Dachfläche eines Fahrzeugs wird die Dachaussenhaut vom Fahrzeuginnem her versteift. Mit der über Klebstoffraupen oder einen vollflächig aufgetragenen Klebstoff mit der Dachhaut verklebten Dachversteifung wird gleichzeitig eine Schalldämmung und Wärmeisolierung erreicht.

Eine aus der EP-B-0 825 066 bekannte Dachversteifung für Fahrzeuge besteht aus einer einseitig mit einer Deckschicht verbundenen Platte aus geschäumtem Kunststoff. zur Herstellung dieser Dachversteifung wird zunächst eine beidseitig mit einer Deckschicht verbundene Platte aus geschäumtem Kunststoff hergestellt. Anschliessend wird die geschäumte Platte mittig in zwei einseitig mit einer Deckschicht versehene Platten gespalten und mit Übermass auf die Abmessungen der Dachhaut zugeschnitten. Eine einzelne Deckschicht wird ebenfalls mit Übermass auf die Abmessung der Dachhaut zugeschnitten und zusammen mit einer Klebstoffschicht zwischen der Schaumplatte und der einzelnen Deckschicht in einem der Wölbung und Kontur der Dachhaut entsprechenden Formwerkzeug auf die endgültige Form umgeformt und verklebt. Kurz vor Öffnung des Formwerkzeugs wird das Formteil zur passenden Dachversteifung ausgestanzt. Der geschäumte Kunststoff ist ein Polyurethanschaum, die Deckschichten bestehen aus Kraftlinern. Die zur Fertigung der Dachversteifung erforderlichen teuren Formwerkzeuge führen zu entsprechend hohen Endkosten.

Auch bei dem aus der WO-A-01/26 878 bekannten Verfahren zur Herstellung einer Dachversteifung für Fahrzeuge wird zunächst eine Platte aus geschäumtem Kunststoff mit beidseitig angeordneten Deckschichten hergestellt und diese anschliessend durch mittiges Spalten in zwei einseitig mit einer Deckschicht versehene Schaumplatten geschnitten. Die endgültige Formgebung der Platte zur Dachversteifung erfolgt hier durch direktes Verkleben der unbeschichteten Seite der Platte mit der Dachhaut. Bei diesem Fertigungsverfahren entfallen die teuren Formwerkzeuge. Die nur einseitige Belegung der Schaumplatte mit einer Deckschicht aus einem Kraftliner oder einem Vlies hat jedoch eine Verminderung der Steifigkeit zur Folge.

Ein Verfahren der eingangs genannten Art ist aus der EP 0 424 312 A1 bekannt. Das Dokument D1 offenbart eine "vorverformte" Verbundplatte aus einem Kern mit Deckschichten, wobei wenigstens eine Deckschicht als "Vorverformung" geradlinig verlaufende, sich über die ganze Breite erstreckende Sicken aufweist. Die Sicken werden in die ebene Verbundplatte eingeformt, wobei die Platte selbst nicht verformt wird, sondern ihre ebene Form beibehält. Erst bei Bedarf, z. B. auf einer Baustelle, werden die "vorverformten" Platten entlang den Sicken gebogen. Die Sicken ermöglichen ein Biegen der Verbundplatte ohne grossen Kraftaufwand. Beim Biegen der Platte verengen bzw. schliessen sich die Sicken. Mit den Sicken wird lediglich der zum leichten Biegen erforderliche Zwischenraum geschaffen.

Der Erfindung liegt die Aufgabe zugrunde, ein Verfahren der eingangs genannten Art zu schaffen, mit welchem Versteifungskörper mit vorgegebener Krümmung ohne teure Formwerkzeuge auf einfache Weise direkt aus einem plattenförmigen, in einem einzigen Verfahrensschritt hergestellten Vormaterial gefertigt werden können.

Zur erfindungsgemässen Lösung der Aufgabe führt ein Verfahren mit den Merkmalen des Anspruchs 1.

Bevorzugt erfolgt das Schneiden des Versteifungskörpers auf seine Endabmessungen durch Stanzen in einem Stanzwerkzeug durchgeführt.

Das gezielte lokale Eindrücken der Deckschicht/en erfolgt zweckmässigerwdise in der Form definierter Rillen oder Nuten, die mit entsprechend geformten Rillern oder Nutern durchgeführt wird.

Das Schneiden des Versteifungskörpers auf seine Endabmessungen und das gezielte lokale Eindrücken der Deckschicht/en werden bevorzugt gleichzeitig in einem einzigen Arbeitsschritt durchgeführt.

Bei einer besonders bevorzugten Ausführungsform des erfindungsgemässen Verfahrens erfolgt das Schneiden des Versteifungskorpers auf seine Endabmessungen und das gezielte lokale Eindrücken der Deckschicht/en durch Stanzen in einem Stanzwerkzeug mit am Stanzwerkzeug entsprechend der am Versteifungskörper vorgesehenen Lage der Rillen oder Nuten angeordneten Rillern oder Nutern durchgeführt.

Mit der erfindungsgemässen Vorgehensweise können die aufwendigen Formteilwerkzeuge und -stanzen durch ein zusätzlich mit Rillern oder Nutern ausgestattetes Flachbett-Stanzwerkzeug ersetzt werden. Die Anwendung der Flachbetttechnik führt zum Wegfall mehrerer Verfahrensschritte und ergibt ein zusätzliches Einsparpotential.

Die biegsame Leichtstoffplatte besteht bevorzugt aus geschäumtem Kunststoff, insbesondere aus einem Polyurethanschaum, vorzugsweise aus einem geschlossenzelligen Polyurethanschaum mit einem Raumgewicht von etwa 30 bis 55 g/m³.

Die Deckschichten können aus den für Anwendung dieser Art bekannten Materialien bestehen und eine oder mehrere Materialschichten umfassen.

Die Materialschicht ist beispielsweise eine Papierschicht, eine Kunststoff- oder Metallfolie oder eine mehrschichtige Folie mit einzelnen Schichten aus einer oder mehreren Papierschichten, Kunststofffolien und/oder Metallfolien. Als Metallfolie eignet sich insbesondere eine Aluminiumfolie.

Eine bevorzugte Materialschicht besteht aus einer Papierschicht, die unbeschichtet oder auch ein- oder beidseitig mit einem Kunststofffilm aus beispielsweise Polyethylen, Polypropylen oder Polyethylenterephthalat als Wasserdampfsperre beschichtet sein kann. Anstelle einer Beschichtung mit einem Kunststofffilm kann die Papierschicht auch mit wasserabweisenden, flammhemmenden und/oder Schimmel und Fäulnis verhindernden Stoffen imprägniert sein.

Bei einer weiter bevorzugten Materialschicht bestehen die Kunststofffolie oder der Kunststofffilm aus einer Folie oder einem Film aus Polyamid, Polyvinylchlorid, Polyethylen, Polypropylen, Polyethylenterephthalat und die Metallfolie aus einer Aluminiumfolie.

Aus Deckschichten mit den vorstehend genannten Papierschichten, Kunststoff- und/oder Metallfolien können auch Versteifungselemente mit an sich bekannten Umformverfahren wie z.B. Prägen mittels Prägewalzen oder Tiefen mittels Stempel und Matrize aus der Materialschicht herausgeformt werden. Die Versteifungselemente erhöhen infolge der rechtwinklig zur unverformten Materialschichtebene auftretenden Zunahme der Dicke des verformten Werkstoffes die Quersteifigkeit des Grundmaterials und führen damit zu einer besseren Biegefestigkeit des Versteifungskörpers.

Die erfindungsgemässen Versteifungskörper können mit Vorteil überall dort eingesetzt werden, wo die Aussenhaut eines Bauteils vor Einbeulungen, die durch äussere Krafteinwirkungen auftreten, geschützt werden soll. Ein bevorzugter Einsatzbereich sind Dachversteifungen für Fahrzeuge, wobei auch Dachhimmel (Headliner), gegebenenfalls mit der Dachhautverstärkung kombiniert, mit den Verstärkungskörpern ausgestattet werden können. Weitere Anwendungen des erfindungsgemässen plattenförmigen Versteifungskörpers sind die Aussteifung flächiger Beplankungen und Formkörper aus Blech oder Kunststoff aller Art, wie z.B. Motorhauben, Kühlschranktüren und weiterer gegen Eindrücken zu verstärkender Bauteile.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: einen Querschnitt durch eine erste Ausführungsform einer Dachversteifung;
- - Fig. 2: einen Querschnitt durch die mit einer Dachhaut eines Fahrzeuges verklebten Dachversteifung von Fig. 1;
- - Fig. 3 und 4: die Bildung einer Krümmung bei einer Dachversteifung im Querschnitt.

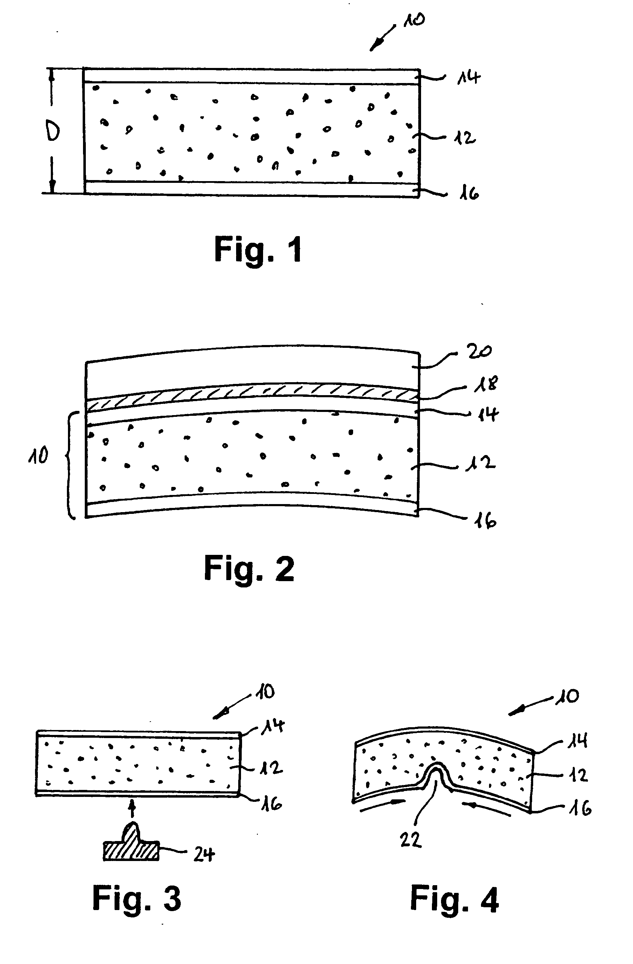

Eine Dachversteifung 10 besteht gemäss Fig. 1 aus einer Platte 12 aus geschäumtem Kunststoff, z.B. Polyurethanschaum, mit beidseitig angeordneten Deckschichten 14, 16, beispielsweise aus einer gekreppten Materialschicht, z.B. aus Krepppapier. Die Gesamtdicke D der Dachversteifung 10 beträgt beispielsweise etwa 5 bis 10 mm.

Die Herstellung dieses Sandwichmaterials erfolgt auf herkömmliche Weise in der Form von Bandmaterial in einer Doppelbandpresse, in der gleichzeitig mit dem Aufschäumen des Kunststoffes zum geschäumten Bandmaterial eine feste Verbindung mit den in Bandform zugeführten Deckschichten, z.B. Kraftliner, erzeugt wird. Die einzelnen Dachversteifungen werden vom Bandmaterial abgelängt und zu einem an die Dachhaut angepassten Formteil gestanzt.

Wie in Fig. 2 gezeigt, wird die Dachversteifung 10 mittels eines in Raupenform oder vollflächig aufgetragenen Klebstoffs 18 mit einer Dachhaut 20 eines in der Zeichnung nicht wiedergegebenen Fahrzeugs verklebt.

Fig. 3 zeigt die Dachversteifung 10 mit der Schaumplatte 12 und den beidseitig mit der Platte 12 fest verbundenen Deckschichten 14, 16 im Bereich einer vorgesehenen Krümmung.

Zur Bildung von Krümmungen werden an vorbestimmten Stellen der Dachversteifung 10 Vertiefungen in der Form von Rillen oder Nuten gezielt lokal in die Deckschichten 14, 16 und in die darunter liegende Schaumplatte 12 eingedrückt. Die zur Einformung von Rillen oder Nuten eingesetzten Werkzeuge entsprechen der Negativform der zu bildenden Rillen oder Nuten und werden hier als Riller bzw. Nuter bezeichnet.

Fig. 4 zeigt die Dachversteifung 10 nach erfolgtem Eindrücken eines Rillers 24 in die Deckschicht 16 und die darunter liegende Schaumplatte 12. Die auf diese Weise gebildete Rille 22 führt zu einer Verkürzung der Deckschicht 16 in der in der Zeichnung durch Pfeile angegebenen Richtung, was insgesamt zu einem gekrümmten Bereich in der Dachversteifung 10 führt.

Die Stärke und die Form einer Krümmung können durch gezielte Anordnung von Rillern oder Nutern und deren Eindringtiefe in weiten Grenzen anhand von einfach durchzuführenden Versuchen bestimmt werden.

## Patentansprüche

1. Verfahren zur Herstellung eines Versteifungskörpers (10) mit wenigstens einem gekrümmten Bereich aus einer ebenen biegsamen Leichtstoffplatte (12) mit beidseitig fest mit der Platte (12) verbundenen Deckschichten (14, 16), wobei die Deckschicht/en (14,16) in dem/den zu krümmenden Bereich/en des Versteifungskörpers (10) gezielt lokal eingedrückt wird/werden und der Versteifungskörper (10) gekrümmt wird,
**dadurch gekennzeichnet, dass**
der Versteifungskörper (10) aus der ebenen Platte (12) mit den beidseitig angeordneten Deckschichten (14,16) auf seine Endabmessungen geschnitten wird und die Deckschicht/en (14,16) beim gezielt lokalen Eindrücken so verkürzt wird/werdendass der wenigstens eine gekrümmte Bereich des Versteifungskörpers (10) gebildet wird.

2. Verfahren nach Anspruch 1, **dadurch gekennzeichnet, dass** das Schneiden des Versteifungskörpers (10) auf seine Endabmessungen durch Stanzen einem Stanzwerkzeug durchgeführt wird.

3. Verfahren nach Anspruch 1, **dadurch gekennzeichnet, dass** das gezielte lokale Eindrücken der Deckschicht/en (14, 16) als Rillen oder Nuten (22) mit einem Riller oder Nuter (24) durchgeführt wird.

4. Verfahren nach einem der Ansprüche 1 bis 3, **dadurch gekennzeichnet, dass** das Schneiden des Versteifungskörpers (10) auf seine Endabmessungen und das gezielte lokale Eindrücken der Deckschicht/en (14,16) gleichzeitig in einem einzigen Arbeitsschritt durchgeführt werden.

5. Verfahren nach den Ansprüchen 2, 3 und 4, **dadurch gekennzeichnet, dass** das das Schneiden des Versteifungskörpers (10) auf seine Endabmessungen und das gezielte lokale Eindrücken der Deckschicht/en (14,16) durch Stanzen in einem Stanzwerkzeug mit am Stanzwerkzeug entsprechend der am Versteifungskörper (10) vorgesehenen Lage der Rillen oder Nuten (22) angeordneten Rillern oder Nutern (24) durchgeführt wird.

6. Verfahren nach Anspruch 5, **dadurch gekennzeichnet, dass** das Stanzwerkzeug ein Flachbett-Stanzwerkzeug ist.

7. Verfahren nach einem der vorangehenden Ansprüche, **dadurch gekennzeichnet, dass** der Versteifungskörper (10) zur Versteifung von flächigen Beplankungen, Formkörpern und Bauteilen mit einer gegen Eindrücken zu verstärkenden Haut aus Blech oder Kunststoff verwendet wird.

8. Verfahren nach Anspruch 7, **dadurch gekennzeichnet, dass** der Versteifungskörper (10) als Dachversteifung für Fahrzeuge verwendet wird.

## Claims

1. Method of producing a stiffening member (10) with at least one curved region from a flat, flexible lightweight panel (12) with outer layers (14, 16) joined firmly to the panel (12) on both sides, the outer layer/s (14, 16) being provided with specific local indentations in the region/s of the stiffening member (10) to be bent and the stiffening member (10) being bent, **characterised in that** the stiffening member (10) is cut to its final dimensions from the flat panel (12) with the outer layers (14, 16) arranged on both sides and the outer layer/s (14, 16) is/are shortened in such a manner when specific local indentations are provided therein that the at least one curved region of the stiffening member (10) is formed.

2. Method according to claim 1, **characterised in that** the stiffening member (10) is cut to its final dimensions by punching in a punching tool.

3. Method according to claim 1, **characterised in that** the outer layer/s (14, 16) is/are provided with specific local indentations in the form of grooves or slots (22) by means of a grooving cutter or slotting cutter (24).

4. Method according to one of claims 1 to 3, **characterised in that** the stiffening member (10) is cut to its final dimensions and the outer layer/s (14, 16) is/are provided with specific local indentations simultaneously in one single operation.

5. Method according to claims 2, 3 and 4, **characterised in that** the stiffening member (10) is cut to its final dimensions and the outer layer/s (14, 16) is/are provided with specific local indentations by punching in a punching tool by means of grooving cutters or slotting cutters (24) arranged on the punching tool in accordance with the intended position of the grooves or slots (22) on the stiffening member (10).

6. Method according to claim 5, **characterised in that** the punching tool is a flat-bed punching tool.

7. Method according to one of the preceding claims, **characterised in that** the stiffening member (10) is used for stiffening surface panelling, moulded parts and components with a skin of sheet metal or plastic to be reinforced to prevent denting.

8. Method according to claim 7, **characterised in that** the stiffening member (10) is used as a roof stiffener for vehicles.

## Revendications

1. Procédé de fabrication d'un élément de renfort (10) comportant au moins une zone courbée constituée d'une plaque en matériau léger flexible plane (12) comportant des couches de recouvrement (14, 16) reliées fixement à la plaque (12) bilatéralement, dans lequel la (les) couche(s) de recouvrement (14, 16) est/sont enfoncées localement de façon appropriée dans la/les zone(s) à courber et l'élément de renfort (10) est courbé,
**caractérisé en ce que**
l'élément de renfort (10) est coupé à ses dimensions finales à partir de la plaque plane (12) comportant les couches de recouvrement (14, 16) disposées bilatéralement et la/les couche(s) de recouvrement (14, 16) est/sont contractées par enfoncement local approprié de sorte que la au moins une zone courbée de l'élément de renfort (10) est formée.

2. Procédé selon la revendication 1, **caractérisé en ce que** la découpe de l'élément de renfort (10) à ses dimensions finales est effectuée par poinçonnage dans un outil de découpage.

3. Procédé selon la revendication 1, **caractérisé en ce que** l'enfoncement local approprié de la/les couche(s) de recouvrement (14, 16) sous la forme de rainures ou de gorges (22) est effectué par une rainureuse ou profileuse (24).

4. Procédé selon l'une des revendications 1 à 3, **caractérisé en ce que** la découpe de l'élément de renfort (10) à ses dimensions finales et l'enfoncement local approprié de la/les couche(s) de recouvrement (14, 16) sont effectués simultanément en une seule étape de travail.

5. Procédé selon les revendications 2, 3 et 4, **caractérisé en ce que** la découpe de l'élément de renfort (10) à ses dimensions finales et l'enfoncement local approprié de la/les couche(s) de recouvrement (14, 16) sont effectués par poinçonnage dans un outil de découpage par des rainureuses ou profileuses (24) disposées conformément à la position des rainures ou des gorges (22) prévues dans l'élément de renfort (10).

6. Procédé selon la revendication 5, **caractérisé en ce que** l'outil de découpage est un outil de découpage à support plat.

7. Procédé selon les revendications précédentes, **caractérisé en ce que** l'élément de renfort (10) est utilisé pour renforcer des revêtements plats, des éléments moulés et des composants comportant un revêtement en tôle ou en matière plastique à renforcer contre l'enfoncement.

8. Procédé selon la revendication 7, **caractérisé en ce que** l'élément de renfort (10) est utilisé en tant que renfort de toit pour véhicules.
